**Europäisches Patentamt**

**European Patent Office**

**Office européen des brevets**

(19)

(11) Veröffentlichungsnummer : **0 294 540 B1**

# EUROPÄISCHE PATENTSCHRIFT

(12)

(45) Veröffentlichungstag der Patentschrift :
**28.06.95 Patentblatt 95/26**

(51) Int. Cl.$^6$ : **G06F 17/14**

(21) Anmeldenummer : **88102545.6**

(22) Anmeldetag : **22.02.88**

(54) **Verfahren zur zweidimensionalen diskreten inversen Cosinus-Transformation.**

(30) Priorität : **12.06.87 DE 3719628**

(43) Veröffentlichungstag der Anmeldung :
**14.12.88 Patentblatt 88/50**

(45) Bekanntmachung des Hinweises auf die
Patenterteilung :
**28.06.95 Patentblatt 95/26**

(84) Benannte Vertragsstaaten :
**CH DE FR GB LI NL**

(56) Entgegenhaltungen :
**EP-A- 0 254 824**

(56) Entgegenhaltungen :
**IEEE TRANSACTIONS ON ELECTROMAGNE-
TIC COMPATIBILITY, Band EMC-24, Nr. 2, Mai
1982, Seiten 278-286, IEEE, New York, US; A.
JALALI et al.: "A high-speed FDCT processor
for real-time processing of NTSC color TV
signal"
PHILIPS TECH. REV., Band 38, Nr. 4,5,
1978-1979, Seiten 119-130; H. BACCHI et al.:
"Real-time orthogonal transformation of co-
lour-television pictures"**

(73) Patentinhaber : **ROBERT BOSCH GMBH
Postfach 30 02 20
D-70442 Stuttgart (DE)**

(72) Erfinder : **Neuner, Hermann, Dipl.-Ing.
Templerzeile 3
D-1000 Berlin 42 (DE)**
Erfinder : **Gärtner, Siegfried, Dipl.-Ing.
Eulerstrasse 9
D-1000 Berlin 65 (DE)**

EP 0 294 540 B1

**Beschreibung**

Stand der Technik

Die Erfindung geht von einem Verfahren nach der Gattung des Anspruchs 1 aus.

Es ist bekannt (Richard Blahut, Fast Algorithmus for Digital Signal Processing, Addison-Wesley Publishing Company, Amsterdam 1984), eine zweidimensionale Cosinus-Transformation anhand von Rechner-Algorithmen durchzuführen. In analoger Weise können die durch die Transformation erhaltenen Spektralwerte durch einen inversen Rechenvorgang wieder in die Ausgangswerte zurücktransformiert werden. Der Rechenvorgang benötigt jedoch auch bei den heutigen Schnellrechnern eine bestimmte Zeit, die nicht unterschritten werden kann.

Der Inhalt der als EP-A-0 254 824 veröffentlichten europäischen Anmeldung 87 106 689.0 gilt in der ursprünglich eingereichten Fassung gemäß Artikel 54(3) und (4) EPÜ für die vorliegende Anmeldung als Stand der Technik.

Aus ihr ist ein Verfahren zur zweidimensionalen diskreten Cosinustransformation bekannt, bei dem gestützt auf die dahinterliegende mathematische Theorie die zweidimensionale Transformation in zwei eindimensionale Transformationen zerlegt wird, die nacheinander auf die Eingangsdaten angewandt werden. Zwischen den beiden Transformatoren ( TR1, TR2 ) befindet sich ein Blockzwischenspeicher ( BZS ) mit zwei Zwischenspeichern ( ZS1, ZS2), welche die in dem ersten Transformator gebildeten Zwischensummen zeilenorientiert und blockweise abwechselnd speichern. In den Transformatoren findet eine Multiplikation von jeweils acht Eingangsdaten der acht mal acht Eingangsdaten umfassenden Blöcke statt, wobei Faktoren zur Anwendung kommen, die sich aus einer Transformationsmatrize ( A ) ergeben. Im Anschluß an die Multiplikation findet eine paarweise Addition statt, und zwar solange, bis jeweils nur eine Zwischensumme bzw. eine Gesamtsumme vorliegt, die auf die n bit gerundet wird.

Vorteile der Erfindung

Das erfindungsgemäße Verfahren mit den kennzeichnenden Merkmalen des Anspruchs 1 hat den Vorteil, daß die Rechenoperationen derart gegliedert werden, daß die diskrete inverse Cosinus-Transformation in kürzester Zeit erfolgt. Durch die in den Unteransprüchen aufgeführten Maßnahmen lassen sich Schaltungsanordnungen zur Durchführung des in dem Anspruch 1 angegebenen Verfahrens in vorteilhafter Weise realisieren. Besonders vorteilhaft ist eine Schaltungsanordnung, bei der für die Durchführung der Rechenvorgänge mehrere miteinander verbundene integrierte Logikschaltungen vorgesehen sind. Dadurch lassen sich der wirtschaftliche und technische Aufwand für die Realisierung der Schaltungsanordnung besonders gering halten. Ein weiterer wesentlicher Vorteil der Erfindung besteht darin, daß die Mittel zur Realisierung des erfindungsgemäßen Verfahrens hardwaremäßig gleich den Mitteln für ein Verfahren zur zweidimensionalen diskreten Cosinus-Transformation sein können und daß sich beide Verfahren nur durch eine andere Transformationsmatrize unterscheiden.

Zeichnung

Ein Ausführungsbeispiel der Erfindung ist in der Zeichnung anhand einer einzigen Figur dargestellt. Die Zeichnung zeigt ein Blockschaltbild einer zweistufigen Transformationsschaltung zur zweidimensionale diskreten, inversen Cosinus-Transformation.

Beschreibung der Erfindung

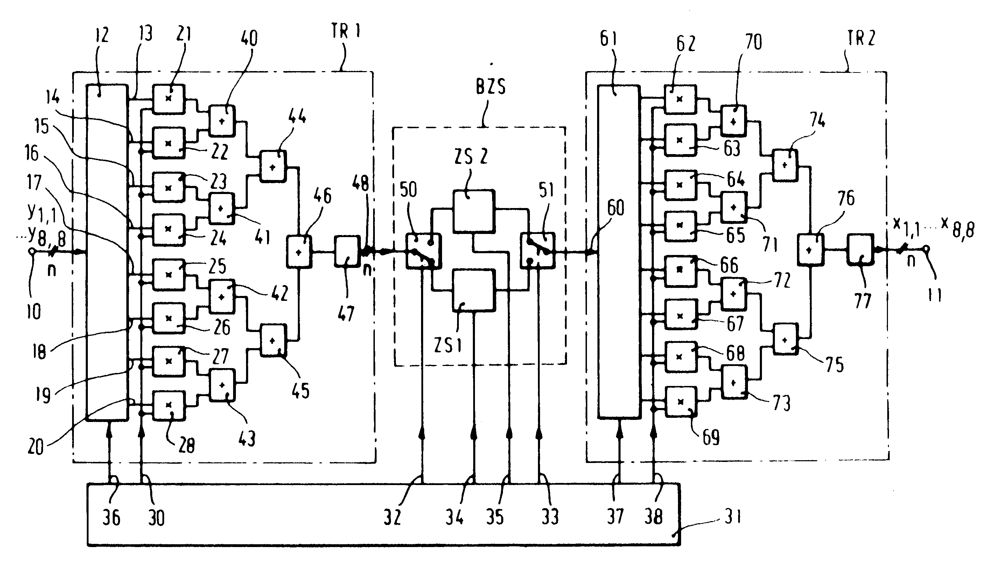

In der Figur bezeichnet 10 einen Eingang und 11 einen Ausgang einer Schaltungsanordnung zur zweidimensionalen diskreten, inversen Cosinus-Transformation. Zwischen dem Eingang 10 und dem Ausgang 11 liegt ein erster eindimensionaler Transformator TR1 in Serie mit einem Blockzwischenspeicher BZS und einem zweiten eindimensionalen Transformator TR2. Es sei vorausgeschickt, daß alle in der Fig. 1 gezeigten Leitungsverbindungen Leitungsbündel sind.

Der erste Transformator TR1 weist einen mit dem Eingang 10 verbundenen Serien-Parallelwandler 12 mit acht Ausgängen 13 bis 20 auf. Jeder Ausgang ist mit einem ersten Eingang je eines Multiplizierers 21 bis 28 verbunden. Die zweiten Eingänge der Multiplizierer führen gemeinsam an einen Ausgang 30 einer elektronischen Speicher- und Steuerungsschaltung 31. Die Ausgänge von je zwei benachbarten Multiplizierern 21, 22; 23, 24; 25, 26; 27, 28 sind mit den beiden Eingängen je eines ersten bis vierten Addierers 40 bis 43 verbunden. Die Ausgänge von je zwei Addierern 40, 41; 42, 43 sind mit den beiden Eingängen eines fünften und sechsten Addierers 44, 45 verbunden an deren Ausgänge ein siebenter Addierer 46 angeschlossen ist. Der Ausgang des siebenten Addierers 46 ist mit einer Rundungsstufe 47 verbunden, deren Ausgang mit 48 bezeichnet ist.

An diesen Ausgang schließt sich der Blockzwischenspeicher BZS an, der eingangsseitig über einen ersten elektronischen Umschalter 50 mit den Eingägen zweier Zwischenspeicher ZS1 und ZS2 verbunden ist. Die Ausgänge der beiden Zwischenspeicher stehen über einen zweiten Umschalter 51 mit einem Eingang 60 des zweiten eindimensionalen Transformators TR2 in Verbundung. Der zweite Transformator hat denselben Aufbau wie der erste Transformator TR1; das heißt er weist einen Serien-Parallelwandler 61, einen ersten bis achten Multiplizierer 62 bis 69, einen ersten bis vierten Addierer 70 bis 73, einen fünften und sechsten Addierer 74, 75, einen siebenten Addierer 76, eine Rundungsstufe 77 auf, deren Ausgang den Ausgang 11 des zweiten Transformators TR2 bildet. Der Blockzwischenspeicher BZS wird durch die elektronische Speicher- und Steuerungsschaltung 31 angesteuert, wobei Signalspannungen an den Ausgängen 32, 33 die elektronischen Umschalter 50 und 51 steuern und die Signalspannungen an den Ausgängen 34 und 35 die Zwischenspeicher ZS1, ZS2. Die Signalspannungen an zwei weiteren Ausgängen 36 und 37 übernehmen die Steuerung der Serien-Parallelwandler 12, 61. Die Signalspannung an einem Ausgang 38 steuert die Multiplizierer 62 bis 69.

Die vorstehend beschriebene Schaltungsanordnung hat folgende Wirkungsweise.

Dem Eingang 10 der Schaltungsanordnung werden vorzugsweise seriell 64 digitale Eingangsgrößen $Y_{i,j}$ ( $i = 1 \ldots 8$; $j = 1 \ldots 8$) zugeführt, die durch die Schaltungsanordnung einer diskreten inversen Cosinus-Transformation unterworfen werden.

Von den 64 Eingangsgrößen stehen durch Serien-Parallelwandlung mit dem ersten Serien-Parallelwandler 12 zunächst die ersten acht Eingangsgrößen $Y_{1,1} \ldots Y_{1,8}$ an den acht Ausgängen 13 bis 20 parallel und durch die Speicher- und Steuerungsschaltung 31 nach einem Algorithmus geordnet zur Verfügung, der sich aus der unten stehenden Transformationsmatrize ergibt. Diese Eingangsgrößen werden den ersten Eingängen der acht Multiplizierer 21 bis 28 zugeführt, in denen sie zunächst mit Faktoren c multipliziert werden, die sich aus der ersten Reihe einer für die diskrete inverse Cosinus-Transformation spezifischen Transformationsmatrize A ergeben.

$$A = \begin{pmatrix} c_1 & c_2 & c_6 & c_3 & c_1 & c_4 & c_7 & c_5 \\ c_1 & c_3 & c_7 & -c_5 & -c_1 & -c_2 & -c_6 & -c_4 \\ c_1 & c_4 & -c_7 & -c_2 & -c_1 & c_5 & c_6 & c_3 \\ c_1 & c_5 & -c_6 & -c_4 & c_1 & c_3 & -c_7 & -c_2 \\ c_1 & -c_5 & -c_6 & c_4 & c_1 & -c_3 & -c_7 & c_2 \\ c_1 & -c_4 & -c_7 & c_2 & -c_1 & -c_5 & c_6 & -c_3 \\ c_1 & -c_3 & c_7 & c_5 & -c_1 & c_2 & -c_6 & c_4 \\ c_1 & -c_2 & c_6 & -c_3 & c_1 & -c_4 & c_7 & -c_5 \end{pmatrix}$$

Die jeweils geltenden Faktoren c werden als von der elektronischen Speicher- und Steuerungsschaltung 31 an dem Ausgang 30 angegebene Signalspannungen den Multiplizierern zugeführt. Die dann an den Ausgängen der acht Multiplizierer anstehenden Produkte werden paarweise entsprechend dem symmetrischen Aufbau der Transformationsmatrize A mittels der Addierer 40 bis 43 addiert. Die von den Addierern gelieferten Summen werden anschließend mittels der Addierer 44 und 45 ebenfalls paarweise entsprechend der Transformationsmatrize A addiert. Die dadurch erhaltenen beiden Summen werden in dem Addierer 46 ebenfalls entsprechend der Transformationsmatrize A addiert, so daß sich am Ausgang des Addierers 46 nur noch eine Summe ergibt. Diese Summe wird auf acht bit entsprechend den je acht bit umfassenden Eingangsgrößen gerundet. Die Rundung erfolgt in einer Rundungsstufe 47. Die erste gerundete Summe, im folgenden als Zwischensumme $X'_{1,1}$ bezeichnet, wird in dem ersten Zwischenspeicher ZS1 abgespeichert, wobei die elektronischen Schalter 50 und 51 die in der Figur gezeigten Schaltstellungen einnehmen. Nachfolgend werden, durch die Speicher-und Steuerungsschaltung 31 gesteuert, mit dem ersten Transformator TR1 sieben weitere Zwischensummen $X'_{1,2}$ bis $X'_{1,8}$ unter Berücksichtigung der Transformationsmatrize A gebildet und zeilenorientiert in dem ersten Zwischenspeicher ZS1 gespeichert. Durch die Speicher- und Steuerungsschaltung 31 werden danach aus den zweiten acht Eingangsgrößen des ersten Blocks Zwischensummen $X'_{2,1}$ bis $X'_{2,8}$ entsprechend der zweiten Zeile der Transformationsmatrize A gebildet und zeilenorientiert in dem ersten Zwischenspeicher ZS1 gespeichert. In analoger Weise erfolgt die Bildung der Zwischensummen $X'_{3,1}$ bis $X'_{8,8}$, die ebenfalls in dem ersten Zwischenspeicher ZS1 gespeichert werden. Erst wenn alle Zwischensummen $X'_{1,1}$ bis $X'_{8,8}$ in dem ersten Zwischenspeicher gespeichert sind, werden die zeilenweise eingespeicherten Zwischensummen mittels der Speicher- und Steuerungsschaltung 31 spaltenweise abgerufen, wobei vorher die Umschalter 50 und 51 in eine von der in der Figur gezeigten Schaltstellung abweichende Schaltstellung übergeführt werden, in welcher der erste Umschalter 50 den Ausgang 48 mit dem Eingang des zweiten Zwischenspeichers ZS2 und der zweite Umschalter 51 den Ausgang des ersten Zwischenspeichers ZS1 mit dem Eingang 60 des zweiten Serien-Parallelwandlers 61 verbindet. Jede der acht Spalten umfaßt acht Werte, die nach Serien-Parallelwandlung mit dem zweiten Serien-Parallelwandler 61 des zweiten Transformators TR2 an dessen acht Ausgängen parallel anstehen. Es folgt dann der gleiche Rechenablauf wie bei dem ersten Transformator TR1, das heißt, es findet zunächst eine Multiplikation in den Multiplizierern 62 bis 68 entsprechend den aus der Transformationsmatrize A abgeleiteten Faktoren und danach eine paarweise Addition in den Addierern 70 bis 76 statt. Die Rundung erfolgt wie bei dem ersten Transformator mittels der Rundungsstufe 77. Am Ausgang 11 der Schaltungsanordnung zur diskreten inversen Cosinus-Transformation erscheinen somit als Ergebnis der Transformation nacheinander je Block acht mal acht gleich 64 Gesamtsummen $X_{1,1}$ bis $X_{8,8}$.

Zeitlich parallel zu dem spaltenweisen Auslesen der in dem ersten Zwischenspeicher ZS1 abgespeicherten Zwischensummen und der Transformation in dem zweiten Transformator TR2 erfolgt in dem ersten Transformator TR1 bereits die Berechnung der Zwischensummen der acht mal acht Eingangsgrößen des zweiten Blocks. Diese Zwischensummen werden nach entsprechender Umschaltung des elektronischen Schalters 50 durch eine Signalspannung am Ausgang 32 der Speicher- und Steuerungsschaltung 31 zeilenorientiert in dem zweiten Zwischenspeicher ZS2 gespeichert. Auch hier müssen wieder erst alle Zwischensummen gespeichert sein, bevor das spaltenweise Auslesen und die eindimensionale Transformation mittels des zweiten Transformators TR2 beginnt. Somit kann unmittelbar nach dem Auftreten der letzten Gesamtsumme des ersten Blocks an dem Ausgang 11 die erste Gesamtsumme des zweiten Blocks abgegeben werden.

In einer alternativen Realisierung der diskreten inversen Cosinus-Transformation werden die Multiplizierer 21 ... 28 und 62 ... 69 durch Look-up-tables ersetzt. In diesen sind alle vorkommenden Produkte gespeichert und durch entsprechende Adressierungen der Serien-Parallelwandler 12, 61 und der Speicher- und Steuerungsschaltung 31 abrufbar.

Eine mögliche Anwendung für die vorstehend beschriebene zweidimensionale diskrete, inverse Cosinus-Transformation ist die Rückgewinnung von durch eine blockweise Cosinus-Transformation erhaltenen Helligkeitswerten von Bildpunkten, zum Beispiel eines Schwarz-Weiß-Fernsehbildes. In diesem Falle bilden jeweils acht Bildpunkte von acht aufeinanderfolgenden Zeilen einen Block. Wesentlich ist dabei, daß die inverse Transformation möglichst schnell vonstatten geht, damit ein Echtzeit-Betrieb möglich ist. Es kommt also darauf an, daß die inverse Transformation in vier bis sechs Mikrosekunden durchgeführt wird. Diese Forderung läßt sich mit dem angegebenen Verfahren realisieren.

## Patentansprüche

1.  Verfahren zur zweidimensionalen diskreten, inversen Cosinus-Transformation einer Folge von Blöcken aus acht mal acht binären Daten, die je n bit umfassen, dadurch gekennzeichnet, daß die ersten acht an einem ersten eindimensionalen Transformator (TR1) parallel anstehenden Eingangsdaten ($Y_{1,1}$-$Y_{1,8}$) mit je einem Faktor (c) multipliziert werden, der sich aus der ersten Zeile der Transformationsmatrize

$$A = \begin{array}{cccccccc}
c_1 & c_2 & c_6 & c_3 & c_1 & c_4 & c_7 & c_5 \\
c_1 & c_3 & c_7 & -c_5 & -c_1 & -c_2 & -c_6 & -c_4 \\
c_1 & c_4 & -c_7 & -c_2 & -c_1 & c_5 & c_6 & c_3 \\
c_1 & c_5 & -c_6 & -c_4 & c_1 & c_3 & -c_7 & -c_2 \\
c_1 & -c_5 & -c_6 & c_4 & c_1 & -c_3 & -c_7 & c_2 \\
c_1 & -c_4 & -c_7 & c_2 & -c_1 & -c_5 & c_6 & -c_3 \\
c_1 & -c_3 & c_7 & c_5 & -c_1 & c_2 & -c_6 & c_4 \\
c_1 & -c_2 & c_6 & -c_3 & c_1 & -c_4 & c_7 & -c_5
\end{array}$$

ergibt, daß die sich ergebenden Produkte paarweise solange addiert werden, bis sich eine erste Zwischensumme ($X'_{1,1}$) ergibt, die auf n bit gerundet wird und in einem ersten Zwischenspeicher (ZS1) eines zwei Zwischenspeicher umfassenden Blockzwischenspeichers (BZS) gespeichert wird, daß sukzessive dieselben acht Eingangsdaten entsprechend der Transformationsmatrize (A) mit den Faktoren der Zeilen 2 bis 8 multipliziert werden und die sich jeweils ergebenden Produkte entsprechend dem für die erste Zeile de Transformationsmatrize angegebenen Schema 34 Zwischensummen ($X'_{1,2}$ ... $X'_{1,8}$) addiert werden, die ebenfalls auf jeweils n bit gerundet in den ersten Zwischenspeicher (ZS1) eingelesen werden usw., bis alle Zwischensummen ($X'_{1,1}$ ... $X'_{8,8}$) der ersten Blocks in dem ersten Zwischenspeicher gespeichert sind, daß die Zwischensummen ($X'_{1,1}$ ... $X'_{8,8}$) nach dem Algorithmus der Cosinus-Transformation spaltenweise ausgelesen und einem zweiten eindimensionalen Transformator (TR2) zugeführt werden, in dem sie nach dem gleichen Rechenschema wie in dem ersten eindimensionalen Transformator (TR1) bearbeitet werden, daß die transformierten Ausgangsdaten ($X_{1,1}$ ... $X_{8,8}$) am Ausgang des Zweiten Transformators zur Verfügung stehen und daß während des Auslesens der Zwischensummen des ersten, dritten, fünften ... Blocks aus dem ersten Zwischenspeicher die in analoger Weise berechneten Zwischensummen des zweiten, vierten, sechsten ... Blocks nacheinander in den zweiten Zwischenspeicher (ZS2) eingelesen werden.

2. Schaltungsanordnung zur Durchführung des Verfahrens nach Anspruch 1, dadurch gekennzeichnet, daß für die Durchführung der Rechenvorgänge mehrere miteinander verbundene integrierte Logikschaltungen vorgesehen sind.

3. Schaltungsanordnung nach Anspruch 2, dadurch gekennzeichnet, daß die integrierten Logikschaltungen zu einer VLSI-Schaltung zusammengefaßt sind.

4. Schaltungsanordnung nach Anspruch 2, dadurch gekennzeichnet, daß alle vorkommenden Produkte in Look-up-tables gespeichert sind, die die Multiplizierer (21 ... 28; 62 ... 69) ersetzen.

## Claims

1. Method for two-dimensional discrete, inverse cosine transformation of a sequence of blocks being composed of eight times eight binary data which consist of n bits each, characterized in that the first eight input data ($Y_{1,1}$-$Y_{1,8}$) present in parallel at a first one-dimensional transformer (TR1) are respectively multiplied by a factor (c) which is yielded from the first row of the transformation matrix

$$A = \begin{matrix}
c_1 & c_2 & c_6 & c_3 & c_1 & c_4 & c_7 & c_5 \\
c_1 & c_3 & c_7 & -c_5 & -c_1 & -c_2 & -c_6 & -c_4 \\
c_1 & c_4 & -c_7 & -c_2 & -c_1 & c_5 & c_6 & c_3 \\
c_1 & c_5 & -c_6 & -c_4 & c_1 & c_3 & -c_7 & -c_2 \\
c_1 & -c_5 & -c_6 & c_4 & c_1 & -c_3 & -c_7 & c_2 \\
c_1 & -c_4 & -c_7 & c_2 & -c_1 & -c_5 & c_6 & -c_3 \\
c_1 & -c_3 & c_7 & c_5 & -c_1 & c_2 & -c_6 & c_4 \\
c_1 & -c_2 & c_6 & -c_3 & c_1 & -c_4 & c_7 & -c_5
\end{matrix}$$

in that the products yielded are added in pairs until a first intermediate sum ($X'_{1,1}$) is yielded which is rounded to n bits and which is stored in a first intermediate memory (ZS1) of a block intermediate memory (BZS) consisting of two intermediate memories, in that the same eight input data are successively multiplied in accordance with the transformation matrix (A) by the factors of the rows 2 to 8 and the products respectively yielded are added in accordance with the scheme 34 specified for the first row of the transformation matrix to form intermediate sums ($X'_{1,2}...X'_{1,8}$) which are read, likewise rounded to n bits in each case, into the first intermediate memory (ZS1) etc., until all the intermediate sums ($X'_{1,1}...X'_{8,8}$) of the first block are stored in the first intermediate memory, in that the intermediate sums ($X'_{1,1}...X'_{8,8}$) are read out in columns in accordance with the algorithm of the cosine transformation and fed to a second one-dimensional transformer (TR2) in which they are processed in accordance with the same computational scheme as in the first one-dimensional transformer (TR1), in that the transformed output data ($X_{1,1}...X_{8,8}$) are available at the output of the second transformer, and in that during the readout of the intermediate sums of the first, third, fifth... block of the first intermediate memory the intermediate sums, calculated in analogous fashion, of the second, fourth, sixth... block are entered successively into the second intermediate memory (ZS2).

2. Circuit arrangement for carrying out the method according to Claim 1, characterized in that a plurality of interconnected integrated logic circuits are provided for carrying out the computing operations.

3. Circuit arrangement according to Claim 2, characterized in that the integrated logic circuits are combined to form a VLSI circuit.

4. Circuit arrangement according to Claim 2, characterized in that all the products occurring are stored in lookup tables which replace the multipliers (21...28; 62....69).

**Revendications**

1. Procédé de transformation bidimensionnelle discrète, inverse, du cosinus d'une suite de blocs consistant en huit fois huit données binaires qui comprennent chacune n bits, procédé caractérisé en ce que :
   - les huit premières données d'entrée ($Y_{1,1}$ à $Y_{1,8}$) qui se trouvent en parallèle sur un premier transformateur monodimensionnel (TR1) sont multipliées chacune par un facteur (c) qui résulte de la première ligne de la matrice de transformation

$$A = \begin{vmatrix} c_1 & c_2 & c_6 & c_3 & c_1 & c_4 & c_7 & c_5 \\ c_1 & c_3 & c_7 & -c_5 & -c_1 & -c_2 & -c_6 & -c_4 \\ c_1 & c_4 & -c_7 & -c_2 & -c_1 & c_5 & c_6 & c_3 \\ c_1 & c_5 & -c_6 & -c_4 & c_1 & c_3 & -c_7 & -c_2 \\ c_1 & -c_5 & -c_6 & c_4 & c_1 & -c_3 & -c_7 & c_2 \\ c_1 & -c_4 & -c_7 & c_2 & -c_1 & -c_5 & c_6 & -c_3 \\ c_1 & -c_3 & c_7 & c_5 & -c_1 & c_2 & -c_6 & c_4 \\ c_1 & -c_2 & c_6 & -c_3 & c_1 & -c_4 & c_7 & -c_5 \end{vmatrix}$$

- l'on additionne les différents produits par paires jusqu'à ce que l'on obtienne une première somme intermédiaire ($X'_{1,1}$) qui est arrondie à n bits et est mise en mémoire dans une première mémoire intermédiaire (ZS1) d'un bloc intermédiaire de mémoire (BZS) comprenant deux mémoires intermédiaires,
- l'on multiplie de façon successive ces mêmes huit données d'entrée selon la matrice de transformation (A) par les facteurs des lignes 2 à 8,
- l'on additionne les produits respectivement obtenus selon le schéma indiqué pour la première ligne de la matrice de transformation, produits qui doivent être entrés dans la première mémoire intermédiaire (ZS1) en étant également arrondis à n bits, etc jusqu'à ce que toutes les sommes intermédiaires ($X'_{1,1}$ à $X'_{8,8}$) du premier bloc soient mises en mémoire dans la première mémoire intermédiaire,
- les sommes intermédiaires ($X'_{1,1}$ à $X'_{8,8}$) sont extraites par colonne selon l'algorithme de la transformation du cosinus, et amenées à un deuxième transformateur monodimensionnel (TR2) dans lequel elles sont retraitées selon le même schéma de calcul que celui effectué dans le premier transformateur monodimensionnel (TR1),
- les données de sortie transformées ($X_{1,1}$ à $X_{8,8}$) sont disponibles à la sortie du deuxième transformateur et
- pendant la sortie des sommes intermédiaires du premier, troisième, cinquième, ... bloc hors de la première mémoire intermédiaire, on entre les sommes intermédiaires calculées d'une manière analogue du deuxième, quatrième, sixième ... bloc les unes après les autres dans la deuxième mémoire intermédiaire (ZS2).

2. Circuit pour la mise en oeuvre du procédé selon la revendication 1, caractérisé en ce que, pour la réalisation du processus de calcul, on prévoit plusieurs circuits logiques intégrés reliés les uns aux autres.

3. Circuit selon la revendication 2, caractérisé en ce que les circuits logiques intégrés sont rassemblés en un circuit (VLSI) (technique à très forte intégration).

4. Circuit selon la revendication 2, caractérisé en ce que tous les produits qui se présentent dans des tables de recherche (loop-up tables) sont mis en mémoire, produits qui remplacent les multiplicateurs (21 à 28 ; 62 à 69).